Europäisches Patentamt

European Patent Office

Office européen des brevets

(11) Veröffentlichungsnummer: **0 425 876 A2**

## (12) EUROPÄISCHE PATENTANMELDUNG

(21) Anmeldenummer: 90119695.6

(22) Anmeldetag: 15.10.90

(51) Int. Cl.⁵: **F16F 9/06**, F16F 9/50,
B60G 17/015

(30) Priorität: 28.10.89 DE 3936034
02.03.90 DE 9002419 U
11.09.90 DE 9012936 U

(43) Veröffentlichungstag der Anmeldung:
08.05.91 Patentblatt 91/19

(84) Benannte Vertragsstaaten:
BE DE ES FR GB IT NL SE

(71) Anmelder: Hermann Hemscheidt
Maschinenfabrik GmbH & Co.
Bornberg 97-103
W-5600 Wuppertal 1(DE)

(72) Erfinder: **Runkel, Walter, Dr. Dipl.-Ing.**
**Mendelssohnweg 30**
**W-5600 Wuppertal 2(DE)**
Erfinder: **Pütz, Christoph, Dipl.-Ing.**
**Am Braken 39G**
**W-5603 Wülfrath(DE)**
Erfinder: **Schulte, Rudolf, Dipl.-Ing.**
**Beukenstrasse 16**
**W-5828 Ennepetal(DE)**

(74) Vertreter: **Patentanwälte Dr. Solf & Zapf**
**Schlossbleiche 20 Postfach 13 01 13**
**W-5600 Wuppertal 1(DE)**

(54) Hydropneumatischer Kolbenspeicher.

(57) Die Erfindung betrifft einen hydropneumatischen Kolbenspeicher (2), insbesondere für Kfz-Federungssysteme, mit einem schwimmend geführten Trennkolben (6), der einen Speicherraum (10) für ein hydraulisches Medium von einer mit einem kompressiblen Medium gefüllten Federkammer (8) trennt, wobei der Trennkolben (6) als Druckwandler mit zwei unterschiedlich großen, wirksamen Druckflächen (22, 24) ausgebildet ist.

FIG.1

EP 0 425 876 A2

# HYDROPNEUMATISCHER KOLBENSPEICHER

Die vorliegende Erfindung betrifft einen hydropneumatischen Kolbenspeicher, insbesondere für Kfz-Federungssysteme, mit einem schwimmend geführten Trennkolben, der einen Speicherraum für ein hydraulisches Medium von einer mit einem kompressiblen Medium gefüllten Federkammer trennt.

Hydropneumatische Speicher haben die Aufgabe, hydraulische Energie zu speichern und sie bei Bedarf wieder abzugeben. Hierzu wird über ein hydraulisches Medium ein kompressibles Medium, insbesondere Gas, komprimiert, so daß der Druck des kompressiblen Mediums ansteigt. Dieser erhöhte Druck dient dann wieder zur Rückverdrängung des hydraulischen Mediums. Hydropneumatische Speicher werden beispielsweise zur Deckung eines kurzzeitigen großen Flüssigkeitsbedarfs, zur Stoß- und Schwingungsdämpfung, zur Aufrechterhaltung eines Druckes bei Pumpenausfall, zum Ausgleich von Leckverlusten oder zur Druck- und Volumenänderung in geschlossenen Systemen verwendet. Es sind hierbei verschiedene Speicher-Bauarten bekannt.

So kann beispielsweise das hydraulische Medium ohne Trennwand insbesondere gegen ein Gas wirken. Bei derartigen Speichern ohne Trennwand ist von Vorteil, daß keine Reibungskraft vorhanden und daher die Hysterese klein ist. Das Gas wird jedoch mit zunehmender Betriebsdauer von der Druckflüssigkeit absorbiert. Es dringt unter ungünstigen Arbeitsbedingungen in das Hydrauliksystem ein und erfordert daher eine besondere Wartung.

Demgegenüber sind hydropneumatische Speicher mit Trennwand bekannt, wobei die Trennwand als Blase, Membran oder als Kolben ausgebildet sein kann.

Bei Blasen- sowie Membranspeichern ist von Nachteil, daß diese im Laufe der Zeit Gas verlieren, da das Gas durch die Blase bzw. die Membran diffundiert. Das Gas muß daher in gewissen Zeitabständen nachgefüllt werden. Weiterhin muß ein Blasen-oder Membranspeicher größer dimensioniert werden, als dies für das jeweilige System eigentlich erforderlich wäre. Die Begründung hierfür ist, daß bei derartigen Speichern das Volumen der Federkammer bzw. kompressiblen Mediums bis auf Null komprimiert werden kann, so daß der Druck gegen unendlich ansteigt, was jedoch zur Zerstörung des Speichers führt. Daher muß der Speicher so groß ausgelegt werden, daß innerhalb des jeweiligen Systems niemals so viel Hydraulikmedium in den Speicherraum verdrängt werden kann, daß dieses "Überkomprimieren" erfolgen kann. Ferner sind Membranen und Blasen stets starken Verformungen und damit verbunden großen Materialbeanspruchungen ausgesetzt, so daß ihre Lebensdauer nur gering ist.

Viele der angesprochenen Nachteile und Probleme werden bei hydropneumatischen Kolbenspeichern der gattungsgemäßen Art vermieden. Derartige Kolbenspeicher kommen beispielsweise in hydropneumatischen Federungssystemen zum Einsatz, wie sie z.B. in der DE-OS 38 39 446 oder der DE-OS 36 13 677 beschrieben sind. Bei allen diesen Systemen werden bei Bewegungen einer zu federnden Masse, beispielsweise eines Fahrzeugrades oder einer Fahrzeugachse, ein Kolben und ein Zylinder einer Kolbenzylindereinheit relativ zueinander bewegt, wodurch ein hydraulisches Medium in Strömung versetzt wird, welches auf den eine "Kompressionsfeder" bildenden Federspeicher wirkt. Beim Einfedern strömt ein bestimmtes Volumen des Hydraulikmediums in den Speicherraum, wodurch der Trennkolben in Richtung der Federkammer verschoben wird und sich deren Volumen verringert. Durch diese Komprimierung wird ein Anstieg des Druckes des kompressiblen Mediums - im folgenden vereinfacht "pneumatischer Druck" genannt -und damit eine Federwirkung in der Federkammer hervorgerufen, wobei der erhöhte Druck über das Hydraulikmedium wieder zum Ausfedern auf die Kolbenzylindereinheit wirkt. Bei den aus den genannten Veröffentlichungen bekannten Federungssystemen ist jedoch der Kolbenspeicher jeweils in eine ein "Federbein" bildende Kolbenzylindereinheit integriert, wodurch diese relativ großvolumig wird, was aus Gründen des erhöhten Platzbedarfs nachteilig sein kann. Ferner ist von Nachteil, daß eine strömungsbedingte Erwärmung des Hydraulikmediums in der Kolbenzylindereinheit sich auf das kompressible Medium übertragen kann, wodurch der pneumatische Druck und damit die Federungseigenschaften verändert werden.

Ein Kolbenspeicher hat nun gegenüber einem Blasen- bzw. Membranspeicher wesentliche Vorteile. Zum einen ist er über einen sehr langen Zeitraum hinweg praktisch absolut gasdicht. Weiterhin kann er wesentlich kleiner dimensioniert werden, da auf einfache Weise ein Reserveraum vorgesehen sein kann, so daß die Federkammer auch in der Einfederungs-Endlage des Trennkolbens noch ein bestimmtes Mindest-Restvolumen für das kompressible Medium aufweist. Hierdurch wird vermieden, daß das Volumen der Federkammer bis auf Null komprimiert werden kann. Durch Bestimmung des Volumens des Reserveraums kann somit gewährleistet werden, daß ein bestimmter maximaler Druck nicht überschritten wird. Bei den bekannten Kolbenspeichern ist jedoch von Nachteil, daß hohe Anforderungen an die Abdichtung des Trennkolbens zwischen der Federkammer und dem Speicherraum gestellt werden, da hier eine Gasdichtigkeit gewährleistet sein muß. Gasdichtungen sind jedoch wesentlich aufwendiger als Flüssigkeitsdichtungen, d.h. üblicherweise sind mehrere Umfangsdichtungen erforderlich. Dabei muß zudem die Innenfläche des den Trennkolben aufnehmenden Zylinders sehr sorgfältig bearbeitet sein, um die Dichtigkeit zu gewährleisten. Die vorgesehenen Dichtungen des Trennkolbens führen zu einer erhöhten Reibungskraft, so daß auch eine größere Verschiebekraft für den Trennkolben erforderlich ist als es der pneumatische Druck normalerweise erforderlich machen würde. Beim Ausfedern (Verschiebung des Trennkolbens in Richtung des Speicherraums) wirkt dann die Reibungskraft dem pneumatischen Druck entgegen. Diese Reibungskraft macht sich damit besonders bei dynamischen Vorgängen negativ bemerkbar. Die Dichtungsreibung ist zum einen abhängig vom Druck und zum anderen auch von der Bewegungsgeschwindigkeit. Bei hohem Druck ist die Dichtungsreibung entsprechend hoch. In Ruhelage des Trennkolbens ist die Dichtungsreibung aber wesentlich größer als bei einer Bewegung. Der Unterschied zwischen der Ruhereibung (Haftreibung) und der Bewegungsreibung (Gleitreibung) macht sich im Betrieb besonders negativ bemerkbar. Wird im Ruhezustand des Trennkolbens Hydraulikmedium in den Speicherraum gedrückt, so erfolgt ein Druckaufbau solange, bis die Ruhereibung der Trennkolben-Dichtungen überwunden ist. Danach fährt der Trennkolben schlag artig los ("Losbrechmoment"), und der hydraulische Druck fällt schlagartig um den entsprechenden Betrag zwischen Ruhereibung und Bewegungsreibung ab. Beispielsweise in Fahrzeug-Federungssystemen macht sich dieser Effekt bei Bewegungen, d.h. bei Federungsbewegungen, als Kraftstöße auf das "Federbein" bemerkbar. Bei oszillierenden Bewegungen des Trennkolbens tritt noch zusätzlich folgender Effekt auf. Bei Bewegung des Trennkolbens in Ausfederungsrichtung wirkt die Reibungskraft der Trennkolben-Dichtungen dem pneumatischen Druck entgegen, d.h. der hydraulische Druck ist entsprechend der Reibungskraft geringer. Kommt der Trennkolben zum Stillstand, wird die Dichtungsreibung entsprechend größer. Um den Trennkolben nun zurückzuschieben, muß sich ein entsprechender Druck aufbauen. Für ein "Federbein" hat dies zur Folge, daß bei Stillstand des Trennkolbens die Ausfederkraft wesentlich geringer als die Einfederkraft ist. Diese Kraftdifferenz ist abhängig vom Druck innerhalb des jeweiligen Systems.

Bei hydropneumatischen Federungssystemen ist die Tragkraft der Kolbenzylindereinheit gleich dem Produkt Druck des kompressiblen Mediums in der Federkammer mal von diesem pneumatischen Druck beaufschlagte Druckfläche des Trennkolbens bzw. Druck des hydraulischen Mediums mal von diesem hydraulischen Druck beaufschlagte Druckfläche des Kolbens der Kolbenzylindereinheit, wobei im Falle der bekannten Systeme der pneumatische Druck gleich dem hydraulischen Druck ist. Bei den bekannten Systemen wurde nun aus Sicherheitsgründen eine hohe Tragkraft insbesondere durch eine große Druckfläche von Trennkolben bzw. Kolben erzielt, woraus aber nachteiligerweise auch eine größe Bauform (Querschnitt) der Kolbenzylindereinheit resultiert, und zwar insbesondere dann, wenn der Kolbenspeicher mit Federkammer, Trennkolben und Speicherraum in die Kolbenzylindereinheit integriert ist, wie dies bei den aus den oben genannten Veröffentlichungen bekannten Systemen der Fall ist. Insbesondere in Kraftfahrzeug-Federungssystemen ist dies jedoch von Nachteil, da im Bereich der zu federnden Räder oder Achsen oft nur wenig Platz zur Verfügung steht. Üblicherweise wird daher anstelle der Druckfläche der Druck entsprechend gesteigert. Da aber zudem aus Gründen des Federungskomforts auch eine möglichst flache, d.h. weiche Federkennlinie erwünscht ist, müßte hierbei auch das Gesamtvolumen der Federkammer sehr groß sein, damit die Federkammer das gesamte Belastungsverhältnis mit möglichst geringer Druckänderung (Volumenänderung) über den Verschiebeweg des Trennkolbens hinweg "aufnehmen" kann.

Bei bekannten Kolbenspeichern hat sich des weiteren nachteiligerweise gezeigt, daß es in bestimmten Betriebszuständen zu einem Abfall des pneumatischen Druckes, d.h. zu Undichtigkeiten im Bereich der Federkammer kommen kann, wodurch der Kolbenspeicher aber nur noch eingeschränkt verwendbar ist oder sogar unbrauchbar wird und daher ersetzt oder instandgesetzt werden muß.

Der vorliegenden Erfindung liegt die Aufgabe zugrunde, einen hydropneumatischen Kolbenspeicher zu schaffen, der bei konstruktiv einfacher und kompakter Ausgestaltung sowie über einen langen Zeitraum hinweg stets optimale Federungseigenschaften gewährleistet.

Erfindungsgemäß wird dies dadurch erreicht, daß der Trennkolben als Druckwandler mit zwei unterschiedlich großen, wirksamen Druckflächen ausgebildet ist. Hierbei ist unter dem Begriff "wirksame Druckfläche" jeweils die von dem pneu matischen bzw. dem hydraulischen Druck beaufschlagte und dabei für die Entstehung einer in Bewegungsrichtung des Trennkolbens wirkenden Verschiebungskraft maßgebende Oberfläche des Trennkolbens zu verstehen. Vorzugsweise ist die der Federkammer zugekehrte, von dem pneumatischen Druck beaufschlagte, erste Druckfläche größer als die gegenüberliegende, von dem hydraulischen Druck beaufschlagte, zweite Druckfläche, so daß erfindungsgemäß der pneumatische Druck kleiner als der hydraulische Druck ist.

Durch die Erfindung kann vorteilhafterweise der Trennkolben mit einer vereinfachten "Öldichtung" anstelle der bisher erforderlichen, aus mindestens drei bis fünf Einzeldichtungen bestehenden "Gasdichtung" ausgestattet werden, da dem Druck des kompressiblen Mediums, insbesondere Druckluft, der höhere Druck des Hydraulikmediums entgegensteht. Dies trägt zu der angestrebten, kompakten Bauform bei, da der Trennkolben mit nur einer Umfangsdichtung und daher mit wesentlich kürzerer, axialer Länge ausgebildet werden kann. Dabei braucht diese Dichtung vorteilhafterweise auch nur für den Differenzdruck zwischen dem pneumatischen und dem hydraulischen Druck ausgelegt zu sein, so daß mit einfachen Mitteln eine hermetische Abdichtung der Federkammer und damit stets ein bestimmter pneumatischer Druck gewährleistet ist.

Wird der erfindungsgemäße Kolbenspeicher in einem Kfz-Federungssystem eingesetzt, so ist hierbei von Vorteil, daß aufgrund des höheren hydraulischen Druckes der Kolbenzylindereinheit die Druckfläche des die Last aufnehmenden Kolbens kleiner und damit die Kolbenzylindereinheit selbst ebenfalls kompakter ausgebildet werden kann.

Obwohl der Trennkolben von beiden Seiten her mit unter schiedlichen Drücken beaufschlagt wird, wird er dennoch von beiden Seiten her mit einer gleichen Kraft beaufschlagt, wobei die Kraft jeweils gleich dem Produkt Druck mal beaufschlagte Druckfläche ist (Prinzip einer "Druckwaage").

Durch die Erfindung wird die Reibungskraft des Trennkolbens wesentlich reduziert. Da der pneumatische Druck geringer als der hydraulische Druck ist, wird die Dichtung des Trennkolbens auch nur mit dem Differenzdruck beaufschlagt und hat daher eine entsprechend geringe Reibung. Dies ist besonders vorteilhaft bei dynamischen Vorgängen und trägt zu den angestrebten, optimalen Federungseigenschaften bei.

Der erfindungsgemäße Kolbenspeicher ist vorzugsweise als gesondertes Bauteil mit einem eigenen, abgeschlossenen Zylinder ausgebildet, in dem der Trennkolben geführt ist und den Speicherraum von der Federkammer trennt. Dabei besitzt der Zylinder einen in die Federkammer mündenden Füllanschluß sowie einen in den Speicherraum mündenden Anschluß für eine externe Leitungsverbindung, über die der Kolbenspeicher in das jeweilige Hydrauliksystem geschaltet werden kann. Im Falle von Federungssystemen ist hierbei von Vorteil, daß das "Federbein" selbst noch kompakter ausgebildet sein kann. Weiterhin kann der erfindungsgemäße Kolbenspeicher vorteilhafterweise an beliebigen Stellen, beispielsweise an einem Fahrzeugrahmen, angeordnet werden, wo genügend Platz zur Verfügung steht, und wo er auch gegen mechanische Einwirkungen geschützt ist. Zudem kann der Kolbenspeicher auch gegen äußere Temperatureinflüsse, wie Sonneneinstrahlung, geschützt werden, die unter Umständen einen negativen Einfluß auf die Federcharakteristik hätten. Auch eine Übertragung der in dem Federbein entstehenden Reibungswärme auf den Kolbenspeicher ist vorteilhafterweise nahezu ausgeschlossen.

In einer besonders vorteilhaften Weiterbildung der Erfindung weist der Trennkolben auf der Seite des Speicherraums ein Verschlußelement auf, welches in einer in Richtung eines speicherraumseitigen Endanschlages verschobenen Absperrstellung des Trennkolbens einen in den Speicherraum mündenden Hydraulik-Anschluß derart verschließt, daß ein ein Restvolumen des Speicherraums aufweisender, abgeschlossener, vollständig mit dem hydraulischen Medium gefüllter Druckraum gebildet ist, wobei das Verschlußelement derart federelastisch ausgebildet ist, daß der Trennkolben gegen eine Federkraft über die Absperrstellung hinaus in Richtung des Endanschlages beweglich ist. Diese erfindungsgemäße Ausführungsform beruht auf der Erkenntnis, daß bei den bekannten Kolbenspeichern Undichtigkeiten und damit verbundene Druckverluste insbesondere dann auftreten, wenn der Speicherraum im wesentlichen drucklos ist und der Trennkolben hierdurch aufgrund des pneumatischen Druckes der Federkammer an einem speicherraumseitigen Endanschlag zur Anlage kommt (Ausfederungsendlage). Dies ist z.B. der Fall, wenn bei der Herstellung des Kolbenspeichers mit noch nicht unter hydraulischem Druck stehendem Speicherraum die Federkammer mit einem bestimmten pneumatischen Vorspanndruck gefüllt wird. Ferner tritt dieser kritische Zustand auf, wenn eine an den Kolbenspeicher angeschlossene Hydraulikeinrichtung, beispielsweise eine Kolbenzylindereinheit, ganz entlastet wird. In allen diesen Fällen ist dann der pneumatische Druck sehr viel größer als der Druck innerhalb des Speicherraums, wobei noch ein zusätzlicher Anstieg des pneumatischen Druckes bei einem Anstieg der Temperatur auftreten kann. Deshalb entweicht bei den bekannten Speichern das kompressible Medium über die Trennkolbendichtung und den Speicherraum. Aufgrund dieser Erkenntnis könnte nun natürlich die Trennkolbendichtung bei Verwendung von gasförmigen kompressiblem Medien als Gasdichtung ausgelegt werden. Gasdichtungen sind aber wesentlich aufwendiger als Flüssigkeitsdichtungen, d.h. es sind üblicherweise mehrere Dichtringe erforderlich, was aber nachteiligerweise auch zu einer erhöhten Reibungskraft mit den oben bereits beschriebenen, nachteiligen Wirkungen führen würde. Durch die erfindungsgemäße Ausgestaltung stützt sich demgegenüber der Trennkolben in der Absperrstellung, d.h. bereits vor Erreichen des mechanischen, speicherraumseitigen Endanschlages, auf dem in dem Druckraum eingeschlossenen, hydraulischen Medium ("Hydraulikpolster") ab, so daß sich aufgrund der in dieser Stellung noch möglichen Axialbewegung des Trennkolbens durch dessen Beaufschlagung mit dem pneumatischen Druck stets automatisch ein entsprechender Gegendruck auf der Seite des Speicher- bzw. Druckraums einstellt. Dieser Gegendruck paßt sich zudem auch vorteilhafterweise automatisch an, wenn sich der pneumatische Druck z.B. temperaturbedingt ändern sollte. Ferner wird sogar auch bei eventueller Undichtigkeit im Bereich des erfindungsgemäßen Verschlußelementes, wodurch das hydraulische Medium langsam aus dem Druckraum entweichen würde, durch eine "Nachführung" des Trennkolbens ein entsprechender hydraulischer Druck aufrecht erhalten. Auf diese Weise wird die Trennkolbendichtung stets von beiden Seiten mit aneinander angepaßten Drücken beaufschlagt, so daß sie niemals nur gegen den vollen pneumatischen Druck abzudichten braucht, weshalb sie vorteilhafterweise als einfache Flüssigkeitsdichtung ausgelegt werden kann, dabei aber dennoch unter allen denkbaren Betriebsbedingungen die Federkammer hermetisch abdichtet.

Weitere vorteilhafte Ausgestaltungsmerkmale der Erfindung sind in den Unteransprüchen und der folgenden Beschreibung enthalten.

Anhand mehrerer, in der Zeichnung dargestellter Ausführungsbeispiele soll die Erfindung im folgenden näher erläutert werden. Dabei zeigen:

Fig. 1 eine erste Ausführungsform eines erfindungsgemäßen Kolbenspeichers in vereinfachter Teil-Längsschnitt-Darstellung,

Fig. 2 eine Ansicht analog zu Fig. 1 einer zweiten, weitergebildeten Ausführungsform der Erfindung,

Fig. 3 eine vergrößerte Detailansicht in Richtung des Pfeils III in Fig. 2,

Fig. 4 eine Ansicht analog zu Fig. 1 bzw. Fig. 2 einer dritten Ausführungsform der Erfindung,

Fig. 5 eine vierte Ausführungsform der Erfindung wiederum in Teil-Längsschnitt-Darstellung,

Fig. 6 eine Ansicht analog zu Fig. 5 einer weiteren Ausführungsform des erfindungsgemäßen Kolbenspeichers,

Fig. 7 einen Längsschnitt durch eine weitere Ausführung des erfindungsgemäßen Kolbenspeichers mit einem integrierten Dämpfungsventil,

Fig. 8 einen Querschnitt längs der Linie VIII-VIII in Fig. 7,

Fig. 9 eine Schnittdarstellung einer stark vereinfachten Ausführung eines Dämpfungsventils zur Erläuterung der prinzipiellen Wirkungsweise,

Fig. 10 eine vereinfachte Teil-Längsschnitt-Darstellung einer weiteren Ausführungsform eines erfindungsgemäßen Kolbenspeichers in einer ersten Stellung (Arbeitsstellung) des Trennkolbens und

Fig. 11 eine Ansicht analog zu Fig. 10 in einer zweiten, Stellung (Absperrstellung) des Trennkolbens.

In den verschiedenen Figuren der Zeichnung sind gleiche bzw. gleichwirkende Teile und Komponente stets mit den gleichen Bezugsziffern bezeichnet.

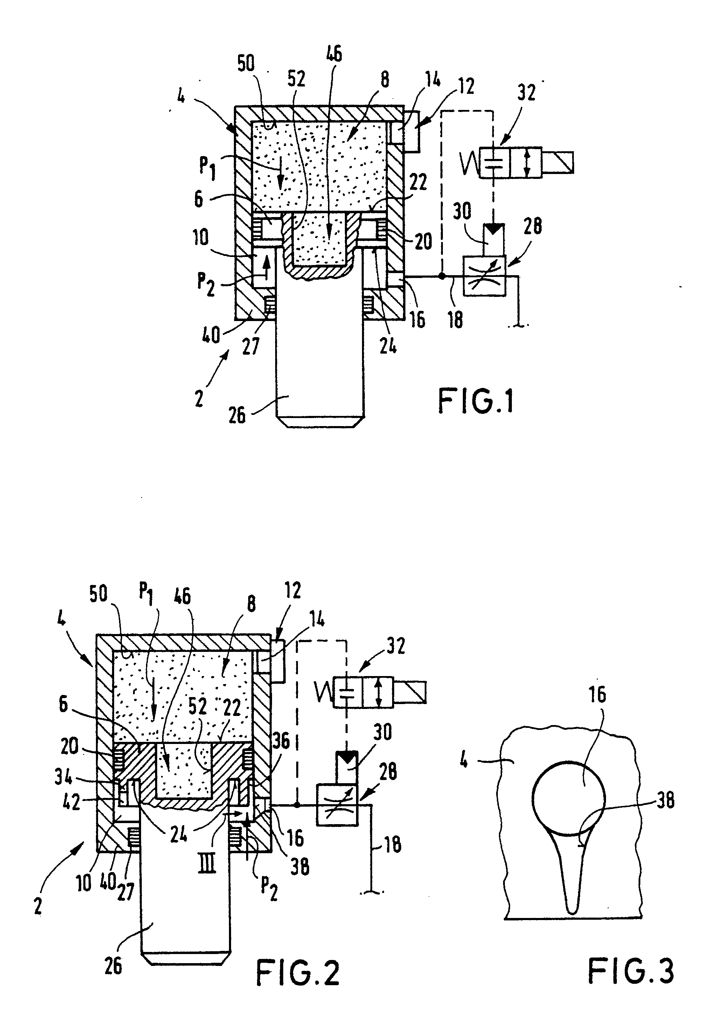

Wie sich zunächst aus Fig. 1 ergibt, besitzt ein erfindungsgemäßer Kolbenspeicher 2 einen Zylinder 4, in dem ein Trennkolben 6 schwimmend, d.h. freibeweglich, geführt ist. Dieser Trennkolben 6 trennt innerhalb des Zylinders 4 eine mit einem kompressiblen Medium gefüllte Federkammer 8 von einem Speicherraum 10, der zur Aufnahme eines nicht kompressiblen, hydraulischen Mediums dient. Innerhalb der Federkammer 8 herrscht ein pneumatischer Druck $p_1$ und in dem Speicherraum 10 ein hydraulischer Druck $p_2$. Als kompressibles Medium kann ein Gas, insbesondere Druckluft, oder auch beispielsweise Silikon oder dergleichen kompressibles Medium mit gegenüber Gas höherer Dichte verwendet werden. Demzufolge beschränkt sich der Begriff "pneumatischer" Druck im Sinne der vorliegenden Erfindung keineswegs nur auf Gase.

Der Kolbenspeicher 2 besitzt einerseits einen in die Federkammer 8 mündenden Füllanschluß 12, der mit einem Verschlußelement, insbesondere einem Ventil 14, ausgestattet ist, so wie andererseits einen in den Speicherraum 10 mündenden Anschluß 16 für eine externe Leitungsverbindung 18. Der Trennkolben 6 ist über eine Umfangsdichtung 20 gegen die Innenwandung des Zylinders 4 abgedichtet.

Hierbei ist nun der Speicherraum 10 über den Anschluß 16 und die Leitungsverbindung 18 beispielsweise mit einer nicht dargestellten Kolbenzylindereinheit verbindbar. Bei Federungsbewegungen dieser Kolbenzylindereinheit strömt ein entsprechendes Volumen des hydraulischen Mediums zwischen der Kolbenzylindereinheit und dem Speicherraum 10 des erfindungsgemäßen Kolbenspeichers 2 hin- und her. Hierdurch erfolgt in an sich bekannter Weise auch eine Verschiebung des Trennkolbens 6 gegen die pneumatische Federwirkung des in der Federkammer 8 enthaltenen Mediums. Dabei beaufschlagt das kompressible Medium den Trennkolben 6 von der Seite der Federkammer 8 her mit dem pneumatischen Druck $p_1$, während das Hydraulikmedium in dem Speicherraum 10 mit dem Druck $p_2$ gegen den Trennkolben 6 wirkt.

Erfindungsgemäß ist nun der pneumatische Druck $p_1$ kleiner, und zwar zumindest geringfügig kleiner, als der hydraulische Druck $p_2$. Hierzu ist der Trennkolben 6 erfindungsgemäß als Druckwandler mit zwei unterschiedlich großen Druckflächen 22 und 24 ausgebildet. Die der Federkammer 8 zugekehrte, von dem pneumatischen Druck $p_1$ beaufschlagte, erste Druckfläche 22 ist dabei erfindungsgemäß größer als die gegenüberliegende, von dem hydraulischen Druck $p_2$ beaufschlagte, zweite Druckfläche 24. Um diese Flächendifferenz zu gewährleisten, ist der Trennkolben 6 erfindungsgemäß mit einer Trennkolbenstange 26 verbunden, die sich durch den Speicherraum 10 hindurch sowie über eine Umfangsdichtung 27 abgedichtet aus dem Zylinder 4 nach außen erstreckt. Somit weist der Speicher raum 10 einen gegenüber dem Innenquerschnitt der Federkammer 8 bzw. des Zylinders 4 reduzierten, ringförmigen, zu der Trennkolbenstange 26 konzentrischen Querschnitt auf. Über eine Variation des Verhältnisses zwischen dem Innenquerschnitt des Zylinders 4 und dem Querschnitt der Trennkolbenstange 26, d.h. über eine Variation des Verhältnisses zwischen den wirksam druckbeaufschlagten Druckflächen 22 und 24, läßt sich hierbei erfindungsgemäß auch das Druckverhältnis $p_1 : p_2$ verändern.

Erfindungsgemäß arbeitet der als Druckwandler ausgebildete Trennkolben 6 nach dem Prinzip einer "Druckwaage", wobei stets ein Gleichgewicht zwischen zwei gegeneinander wirkenden Kräften besteht, die als Produkt aus der jeweiligen Druckfläche 22, 24 und dem jeweiligen Druck $p_1$, $p_2$ stets gleich sind. Es gilt die Gleichung

$$F = p_1 \cdot A_{22} = p_2 \cdot A_{24},$$

wobei $A_{22}$ die Oberfläche der Druckfläche 22 und $A_{24}$ diejenige der Druckfläche 24 bedeuten.

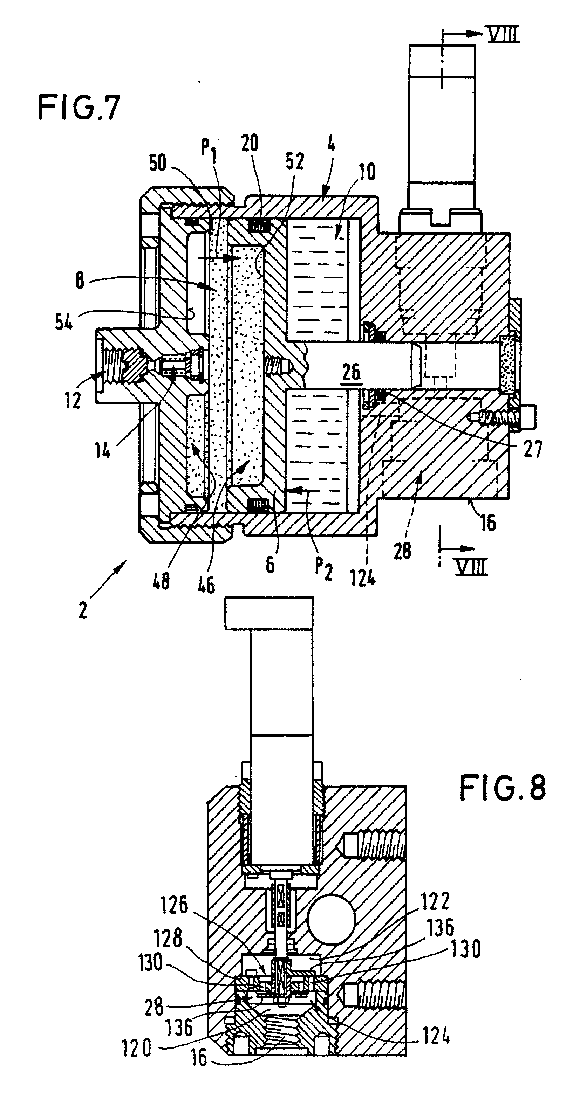

Wie weiterhin in Fig. 1 dargestellt ist, kann in der externen Leitungsverbindung 18 ein insbesondere lastabhängig einstellbares Dämpfungsventil 28 angeordnet sein. Dieses Dämpfungsventil 28 besitzt ein Verstellglied 30, welches über ein Schaltventil 32 mit dem jeweils anstehenden, hydraulischen Druck $p_2$ beaufschlagbar ist. Das Dämpfungsventil 28 kann jedoch erfindungsgemäß auch in den Kolbenspeicher 2 integriert sein, was im folgenden unter Bezug auf die Fig. 7 bis 9 noch beschrieben werden wird.

In einer in Fig. 2 und 3 veranschaulichten Weiterbildung der Erfindung ist der Kolbenspeicher 2 mit einer hydraulischen Endlagen-Stoßdämpfung für den Trennkolben 6 (hydraulische Bremse) ausgestattet, die hier insbesondere in Ausfederungsrichtung, d.h. in Entspann-Richtung der pneumatischen Feder, wirkt. Der Trennkolben 6 weist auf der Seite des Speicherraumes 10 einen axialen, konzentrischen Ringsteg 34 derart auf, daß zwischen diesem Ringsteg 34 und der Innenwandung des Zylinders 4 ein geringer Ringspalt 36 gebildet ist. Der Ringsteg 34 umschließt die Trennkolbenstange 26 konzentrisch mit Abstand. Ferner ist der in den Speicherraum 10 mündende Anschluß 16 im dem Trennkolben 6 axial abgekehrten Endbereich der Umfangswandung des Zylinders 4 angeordnet und besitzt hierbei eine innere Mündungsöffnung 38, die gemäß Fig. 3 eine sich in dem Trennkolben 6 axial abgekehrter Richtung insbesondere birnenförmig verjüngende Flächenform besitzt. Hierdurch ist erfindungsgemäß zwischen dem Anschluß 16 und dem Speicherraum 10 ein Drosselkanal mit einem sich in Abhängigkeit von der Trennkolbenbewegung ändernden Strömungsquerschnitt gebildet. Dieser Drosselkanal wird in Ausfederungsrichtung kleiner und in Einfederungsrichtung entsprechend größer. Dabei ist es wesentlich, daß der Drosselkanal in der Ausfederungs-Endlage des Trennkolbens 6, in der der Ringsteg 34 auf einem radial nach innen weisenden, die Umfangsdichtung 27 haltenden Zylinder-Endsteg 40 aufliegt, noch einen bestimmten Mindest-Strömungsquerschnitt aufweist, damit der Druck $p_2$ die Druckfläche 24 zum Einfedern des Trennkolbens 6 beaufschlagen kann. Hierzu ist es zweckmäßig, wenn der Ringsteg 34 des Trennkolbens 6 radiale Durchströmöffnungen 42 beispielsweise in Form von Ausnehmungen oder Löchern aufweist.

Zusätzlich zu dieser hydraulischen Endlagen-Stoßdämpfung in Ausfederungsrichtung kann der erfindungsgemäße Kolbenspeicher 2 auch mit einer entsprechenden Endlagen-Stoßdämpfung in Einfederungsrichtung ausgestattet sein, die dann auf der Seite der Federkammer 8 angeordnet und als pneumatische Dämpfung ausgebildet ist (nicht dargestellt).

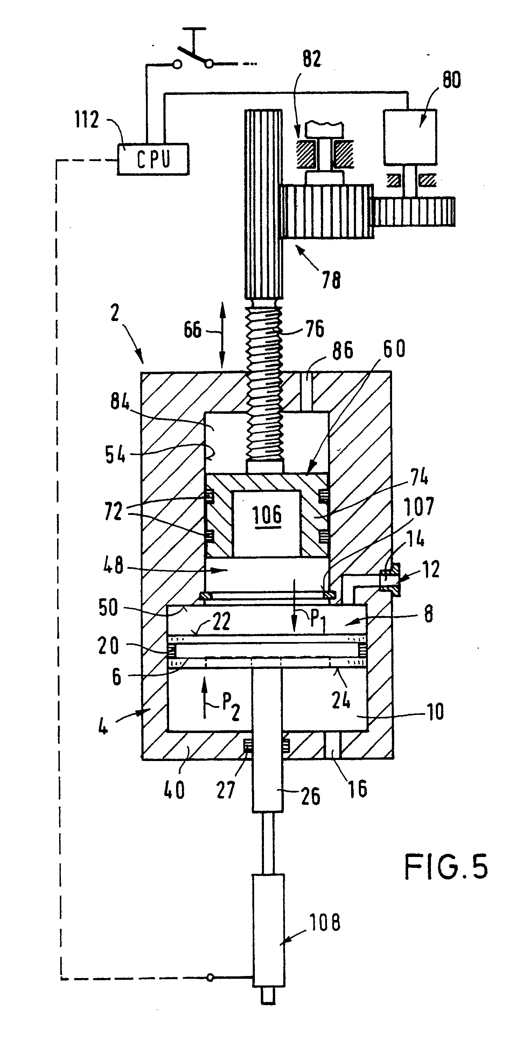

Erfindungsgemäß ist nun weiterhin die Federkammer 8 derart mit mindestens einem Reserveraum 46 (Fig. 1, 2, 4 und 7) bzw. 48 (Fig. 5, 6 und 7) verbunden, daß in der Einfederungs-Endlage des Trennkolbens 6, d.h. wenn dieser nach maximaler Verschiebung in Richtung der Federkammer 8 an einem mechanischen Anschlag 50 zur Anlage kommt, noch ein bestimmtes Mindest-Restvolumen $V_{res}$ für das kompressible Medium vorhanden ist. Hierdurch wird vorteilhafterweise vermieden, daß das kompressible Medium in der Federkammer 8 zu stark (bis auf Null) komprimiert wird, wodurch der Druck $p_1$ unzulässig hoch ansteigen würde und der Speicher platzen könnte. Die Größe bzw. das Volumen $V_{res}$ des Reserveraums 46 bzw. 48 ist somit maßgebend für den maximalen Druck $p_{max}$, der darüber hinaus aber auch von dem Druck $p_{aus}$ - ("Leerlaufdruck") in der ganz ausgefederten Lage des Trennkolbens 6 sowie von dem dazugehörigen Maximalvolumen $V_{max}$ = Volumen $V_{Fk}$ der Federkammer 8 plus $V_{res}$ abhängig ist. Aufgrund der Gesetzmäßigkeit $p \cdot V^x$ konst. gilt:

$$p_{aus} \cdot (V_{Fk} + V_{res})^x = p_{max} \cdot V_{res}^x$$

$$p_{max} = p_{aus} \cdot \left(\frac{V_{Fk} + V_{res}}{V_{res}}\right)^x$$

Der Einfluß der Größe des Reserveraums 46 bzw. 48 auf den maximal möglichen Druck $p_{max}$ soll an folgendem Zahlenbeispiel verdeutlicht werden, wobei ein von der Art des kompressiblen Mediums und dem jeweiligen Betriebszustand abhängiger Faktor ($\chi$) unberücksichtigt bleiben soll. Es sei $p_{aus}$ gleich 20 bar und $V_{Fk}$ gleich 1.000 cm³; damit ergibt sich

$$a) \qquad bei \ V_{res} = 100 \ cm^3$$

$$p_{max} = 20 \ bar \cdot \frac{1000 + 100}{100}$$

$$\underline{p_{max} = 220 \ bar.}$$

$$b) \qquad bei \ V_{res} = 300 \ cm^3$$

$$p_{max} = 20 \ bar \cdot \frac{1000 + 300}{300}$$

$$\underline{p_{max} = 86,7 \ bar}$$

Das Volumen $V_{res}$ des Reserveraums 46 bzw. 48 bestimmt daher aber auch das für die Federkennlinie maßgebende, sogenannte Stoßverhältnis $p_{max}/p_{aus}$, so daß durch Volumen-Auslegung des Reserveraums 46, 48 die Federcharakteristik festgelegt werden kann.

In den Ausführungsformen der Fig. 1 und 2 ist nun erfindungsgemäß der Reserveraum 46 trennkolbenseitig angeordnet und mit konstantem, einmal durch entsprechende Berechnung bestimmten Volumen $V_{res}$ von einer sich axial durch den Trennkolben 6 hindurch in die Trennkolbenstange 26 erstreckenden Vertiefung 52 gebildet.

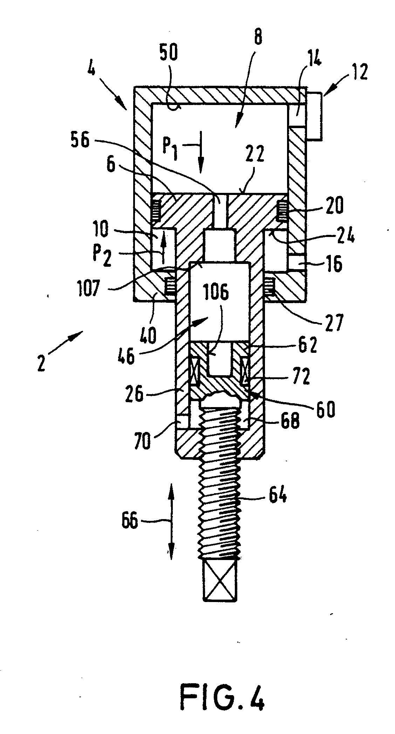

In der Ausführung nach Fig. 7 setzt sich der Reserveraum aus dem trennkolbenseitigen Reserveraum 46 sowie einem diesem gegenüberliegenden, zylinderseitigen Reserveraum 48 zusammen. Dabei besitzt dieser Reserveraum 46, 48 ebenfalls ein konstantes Volumen $V_{res}$. Der trennkolbenseitige Reserveraum 46 ist von einer sich axial in den Trennkolben 6 erstreckenden Vertiefung 52 gebildet und der gegenüberliegende Reser veraum 48 von einer sich auf der dem Trennkolben 6 gegenüberliegenden Seite an die Federkammer 8 anschließenden Zylinderkammer 54. Gemäß Fig. 4 ist demgegenüber die Trennkolbenstange 26 zur Bildung des Reserveraums 46 hohl, insbesondere hohlzylindrisch, ausgebildet, und der Reserveraum 46 ist über mindestens eine axiale Passage 56 des Trennkolbens 6 mit der Federkammer 8 verbunden.

In den in Fig. 4, 5 und 6 dargestellten, besonders vorteilhaften Ausführungsformen der Erfindung ist nun vorgesehen, daß das Volumen des trennkolbenseitigen Reserveraums 46 bzw. das Volumen des dem Trennkolben 6 gegenüberliegenden, zylinderseitigen Reserveraums 48 über Stellmittel 60 von außen veränderbar ist. Dies bedeutet, daß erfindungsgemäß durch Variation des Volumens $V_{res}$ des Reserveraums 46 und/oder 48 der Stoßgrad $p_{max}/p_{aus}$ und damit die Federcharakteristik verändert werden kann, und zwar vorteilhafterweise von außen ohne Demontage des Kolbenspeichers 2.

Im Falle der Ausführungsform nach Fig. 4 weisen die Stellmittel 60 einen Steuerkolben 62 auf, der innerhalb der hohlzylindrischen Trennkolbenstange 26 axial verschiebbar geführt ist. Der Steuerkolben 62 ist dabei erfindungsgemäß entweder mechanisch oder mittels eines Druckmediums, insbesondere hydraulisch, verstellbar. Bei der Ausführung nach Fig. 4 ist eine mechanische Verstellung vorgesehen. Hierzu ist der Steuerkolben 62 auf seiner dem Trennkolben 6 abgekehrten Seite mit einer Gewindespindel 64 verbunden, die sich durch ein Innengewinde am Ende der Trennkolbenstange 26 nach außen erstreckt. Hierdurch erfolgt bei Drehung der Gewindespindel 64 eine axiale Verstellung des Steuerkolbens 62 in Doppelpfeilrichtung 66. Auf der dem Trennkolben 6 abgekehrten Seite des Steuerkolbens 62 ist ein die Gewinde spindel 64 umschließender Ringraum 68 gebildet, der über mindestens eine Lüftungsöffnung 70 mit atmosphärischem Druck verbunden ist. Aus diesem Grund ist der Steuerkolben 62 über eine als Gasdichtung ausgebildete Umfangsdichtung 72 gegen die Innenwandung der hohlzylindrischen Kolbenstange 26 abgedichtet.

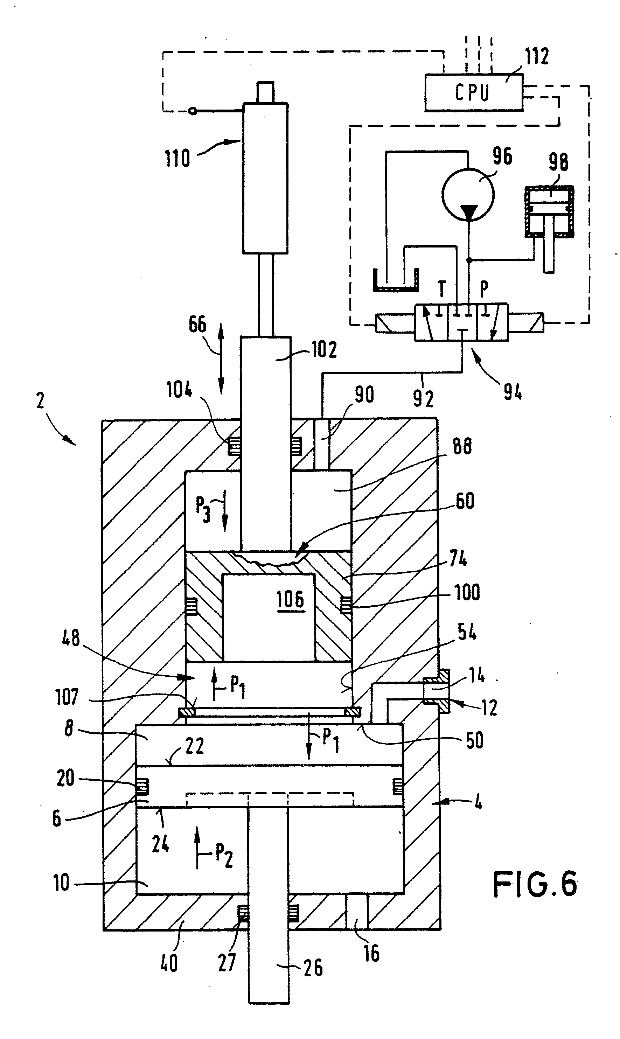

Gemäß Fig. 5 und 6 weisen die Stellmittel 60 einen innerhalb der Zylinderkammer 54 verstellbar geführten Steuerkolben 74 auf. Im Falle der Fig. 5 ist dieser Steuerkolben 74 analog zur Ausführung nach Fig. 4 mechanisch verstellbar, wozu er auf seiner dem Trennkolben 6 abgekehrten Seite mit einer Gewindespindel 76 verbunden ist, die sich durch ein Innengewinde des Zylinders 4 nach außen erstreckt. Die Gewindespindel 76 ist mit einem nur schematisch dargestellten Rotationsantrieb 78 aus einem Motor 80 und einem Getriebe 82 verbunden. Auch hier ist wiederum ein innerhalb der Zylinderkammer 54 die Gewindespindel 76 umschließender Ringraum 84 über mindestens eine Lüftungsöffnung 86 mit der Außenatmosphäre verbunden, so daß der Steuerkolben 74 ebenfalls mit einer hier aus zwei Umfangsdichtungen 72 bestehenden Gasdichtung ausgestattet ist.

Die Ausführungsform nach Fig. 6 entspricht im wesentlichen derjenigen nach Fig. 5, wobei allerdings hier eine hydraulische Verstellung des Steuerkolbens 74 vorgesehen ist. Hierzu mündet in einen auf der dem Trennkolben 6 abgekehrten Seite des Steuerkolbens 74 angeordneten Druckraum 88 ein Anschluß 90, der über eine Leitungsverbindung 92 sowie über ein Schaltventil 94 wahlweise mit einer Druckleitung P oder einer Tank-Rücklaufleitung T eines Hydrauliksystems verbunden werden kann. Hierbei wird der hydraulische Druck von einer Pumpe 96 erzeugt und vorzugsweise in einem zusätzli chen Speicher 98 gespeichert, so daß stets ein ausreichender hydraulischer Druck zur Verfügung steht. Dabei ist erfindungsgemäß auch der Steuerkolben 74 als Druckwandler ausgebildet, so daß der hydraulische Steuerdruck $p_3$ größer als der pneumatische Druck $p_1$ ist. Hierdurch kann der Steuerkolben 74 vorteilhafterweise mit einer vereinfachten, als "Öldichtung" ausgebildeten Umfangsdichtung 100 ausgestattet werden. Analog zu dem Trennkolben 6 wird dieser Druckunterschied im Bereich des Steuerkolbens 74 dadurch erreicht, daß der Steuerkolben 74 auf seiner der Federkammer 8 abgekehrten Seite mit einer Steuerkolbenstange 102 verbunden ist, die über eine Umfangsdichtung 104 abgedichtet aus dem Zylinder 4 bzw. der Zylinderkammer 54 nach außen geführt ist.

In allen dargestellten Ausführungsbeispielen, in denen eine Verstellung des Volumens $V_{res}$ des Reserveraums vorgesehen ist, ist es zudem besonders vorteilhaft, wenn der Steuerkolben 62 bzw. 74 auf seiner der Federkammer 8 zugekehrten Seite eine Vertiefung 106 aufweist, die auch bei einer Verstellung des Steuerkolbens 62 bzw. 74 in Richtung der Federkammer 8 gegen einen mechanischen Endanschlag 107 stets noch ein Mindest-Restvolumen für das kompressible Medium gewährleistet.

Wie beispielhaft in den Fig. 5 und 6 dargestellt ist, können/kann der Trennkolben 6 und/oder der Steuerkolben 74 mit (jeweils) einem die Kolbenstellung erfassenden Weggeber 108, 110 verbunden sein. Hierdurch läßt sich über einen mit dem Weggeber 108, 110 verbundenen Rechner 112 im dynamischen Betrieb das Volumen $V_{res}$ des Reserveraums 48 an bestimmte Verhältnisse anpassen. Dabei läßt die erfaßte Stellung des Trennkolbens 6 eine Aussage über die Belastung bzw. den Federungszustand zu. Anhand der Stellung des Steuerkolbens 74 läßt sich das Verhältnis $V_{max}/V_{res}$ bzw. $p_{max}/p_{aus}$, d.h. der Stoßgrad bzw. die Federcharakteristik einstellen und überwachen. Hierzu werden die Stellmittel 60 von dem Rechner 112 angesteuert, d.h. im Falle der Fig. 5 steuert der Rechner 112 den Motor 80 des Rotationsantriebes 78, und im Falle der Fig. 6 wird durch den Rechner 112 das Schaltventil 94 in eine seiner beiden Durchlaßstellungen geschaltet.

Wie oben bereits erwähnt, ist der erfindungsgemäße Kolbenspeicher 2 in der Ausführungsform nach Fig. 7 und 8 mit einem integrierten, zwischen dem Speicherraum 10 und dessen Anschluß 16 angeordneten, insbesondere hinsichtlich der Dämpfungswirkung verstellbaren Dämpfungsventil 28 ausgestattet. Das Dämpfungsventil 28 besitzt eine erste Ventilkammer 120, in die der Anschluß 16 mündet, sowie eine zweite Ventilkammer 122, die über einen nur in Fig. 7 gestrichelt dargestellten Kanal 124 mit dem Speicherraum 10 verbunden ist. Das Dämpfungsventil 28 besteht hierbei vorzugsweise aus zwei einzelnen Drosselventilen 124 und 126, und zwar einem Einfederungs-Drosselventil 124 zum Dämpfen der Einfederungs-Strömung in den Speicherraum 10 hinein sowie einem Ausfederungs-Drosselventil 126 zum Dämpfen der Ausfederungs-Strömung aus dem Speicherraum 10 heraus. Die beiden Ventilkammern 120 und 122 sind über eine Trennwand 128 voneinander getrennt, wobei sich durch diese Trennwand 128 hindurch für jedes Drosselventil 124 bzw. 126 mindestens ein Drosselkanal 130 erstreckt. Die Drosselkanäle 130 sind dabei zur Dämpfungseinstellung jeweils mit einem Ventilelement ausgestattet.

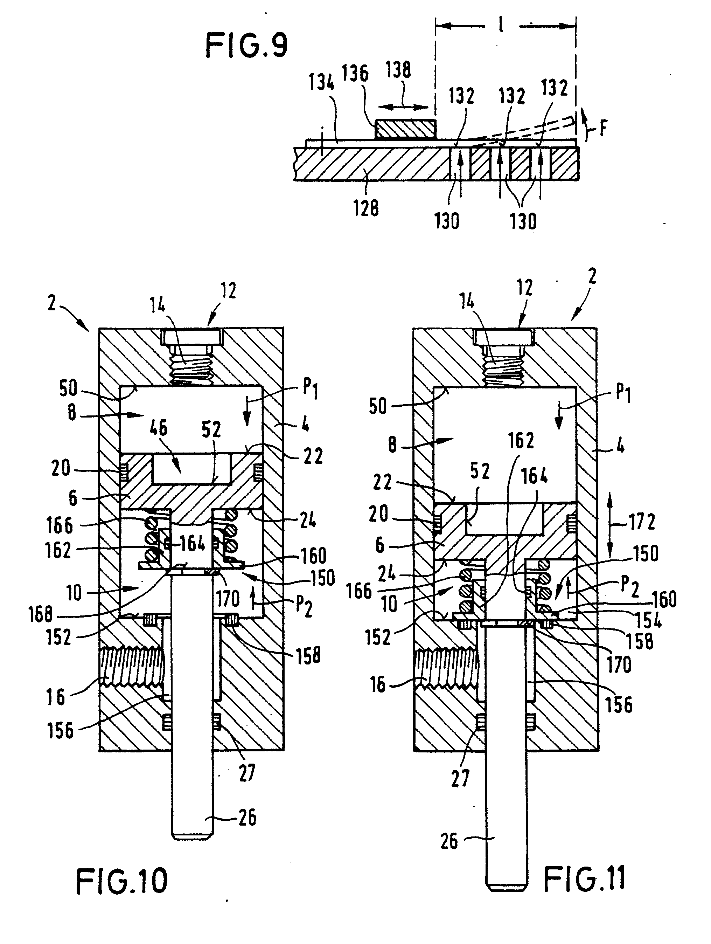

Wie nun in Fig. 9 vereinfacht dargestellt ist, ist jedes Ventilelement als den Drosselkanal 130, im dargestellten Beispiel jeden von mehreren Drosselkanälen 130, an seiner Austrittsmündung 132 für das hydraulische Medium zumindest teilweise abdeckendes, einendig eingespanntes Blattfederelement 134 ausgebildet. Dabei erfolgt die Dämpfungseineinstellung durch Variation der freien Blattlänge bzw. der Einspannlänge 1 des Blattfederelementes 134. Hierzu ist zweckmäßigerweise jeweils ein längs des Blattfederelementes 134 über dieses hinweg derart beweglich geführtes Andruckelement 136 vorgesehen (siehe den Doppelpfeil 138 in Fig.9), daß das Blattfederelement 134 zwischen der Trennwand 128 und dem Andruckelement 136 mit der variablen Länge 1 eingespannt ist. Hierdurch ändert sich auch die Federkraft F des Blattfederelementes 134, die zum Öffnen der Drosselkanäle 130 durch Verbiegen des Blattfederelementes 134 in eine in Fig. 9 gestrichelt eingezeichnete Lage von dem durch die Drosselkanäle 130 strömenden Medium aufzubringen ist. Es läßt sich hierdurch sehr feinfühlig sowie vorzugsweise stufenlos die Dämpfungs- bzw. Drosselwirkung durch Variation des offenen Strömungsquerschnittes verändern. Dabei läßt sich das Andruckelement 136 vorzugsweise auch über die Drosselkanäle 130 bewegen, so daß diese auch gänzlich verschlossen werden können. Im dargestellten Ausführungsbeispiel besitzt jedes Drosselventil 124, 126 mehrere parallele, auf einem Kreisbogen verteilt angeordnete Drosselkanäle 130, die von jeweils einem ringscheibenförmigen, radial geschlitzten Blattfederelement 134 abgedeckt sind. Das jeweilige Andruckelement 136 ist fingerartig, radial von einer drehbaren Welle abstehend ausgebildet, so daß es sich bei Drehung der Welle über das jeweilige Blattfederelement 134 hinweg. auf einer Kreisbahn bewegt. Nähere Einzelheiten zu der Ausgestaltung des Dämpfungsventils 28 sind in der älteren deutschen Patentanmeldung P 39 25 520.4 der Anmelderin enthalten, auf die an dieser Stelle in vollem Umfange Bezug genommen wird.

In der in Fig. 10 und 11 veranschaulichten Ausführungsform der Erfindung, wobei wiederum gleiche Teile mit den gleichen Bezugsziffern bezeichnet sind und daher nicht noch einmal beschrieben zu werden brauchen, weist der Trennkolben 6 erfindungsgemäß auf der Seite des Speicherraums 10 ein Verschlußelement 150 auf, welches in einer in Richtung eines speicherraumseitigen Endanschlages 152 verschobenen Absperrstellung des Trennkolbens (siehe Fig. 11) den in den Speicherraum 10 mündenden Hydraulik-Anschluß 16 derart verschließt, daß von einem Restvolumen des Speicherraums 10 ein abgeschlossener, vollständig mit dem hydraulischen Medium gefüllter Druckraum 154 gebildet ist. Dabei ist das Verschlußelement 150 vorteilhafterweise derart federelastisch ausgebildet bzw. gelagert, daß der Trennkolben 6 gegen eine Federkraft über die in Fig. 11 dargestellte Absperrstellung hinaus in Richtung des Endanschlages 152 beweglich ist.

Vorzugsweise geht der seitlich an dem Zylinder 4 angeordnete Hydraulik-Anschluß 16 in einen axialen Kanalabschnitt 156 über, der im dem Trennkolben 6 axial gegenüberliegenden Bereich des Speicherraums 10 in axialer Richtung sowie vorzugsweise zentrisch in diesen mündet. Die Trennkolbenstange 26 erstreckt sich hierbei derart durch den axialen Kanalabschnitt 156 hindurch, daß dieser die Trennkolbenstange 26 mit einem kreisringförmigen Querschnitt konzentrisch umschließt. Das Verschlußelement 150 des Trennkolbens 6 besitzt vorzugsweise ein an der Trennkolbenstange 26 in axialer Richtung federelastisch beweglich angeordnetes, in der Absperrstellung die Mündung des axialen Kanalabschnittes 156 überdeckendes sowie den Druckraum 154 über eine die Mündung umschließende Dichtung 158 abdichtendes Ringscheibenelement 160. Die Dichtung 158 ist vorzugsweise als O-Ring in einer die Mündung des Kanalabschnittes 156 umschließenden Ringnut des Zylinders 4 angeordnet. Vorzugsweise ist das Ringscheibenelement 160 des Verschlußelementes 150 insbesondere einstückig mit einer verschiebbar auf der Trennkolbenstange 26 angeordneten Ringhülse 162 verbunden. Dabei ist ein zwischen der Trennkolbenstange 26 und der Ringhülse 162 gebildeter Ringspalt erfindungsgemäß über einen Dichtring 164 abgedichtet. Ferner ist zwischen dem Trennkolben 6 und dem Verschlußelement 150, d.h. zwischen dem Trennkolben 6 und vorzugsweise dem Ringscheibenelement 160, eine Druckfeder 166 unter Vorspannung angeordnet. Diese Druckfeder 166 ist zweckmäßigerweise als die Trennkolbenstange 26 und die Ringhülse 162 konzentrisch umschließende Spiralfeder ausgebildet. Schließlich weist die Trennkolbenstange 26 für das Verschlußelement 150 auf dessen dem Trennkolben 6 abgekehrten Seite einen Anschlag 168 auf, der insbesondere von einem in einer Ringnut der Trennkolbenstange 26 sitzenden SeegerRing 170 gebildet ist. Dieser Anschlag 168 begrenzt die Bewegung des Verschlußelementes 150 in eine dem Trennkolben 6 abgekehrte Richtung. Der Anschlag 168 bzw. der SeegerRing 170 ist dabei mit einer radialen Flächenausdehnung ausgebildet, die kleiner als die Mündung des Kanalabschnittes 156 ist, so daß in der Absperrstellung (Fig. 11) der Seeger-Ring 170 innerhalb des Mündungsbereichs des Kanalabschnittes 156 angeordnet ist. Hierdurch kann das Ringscheibenelement 160 zur dichtenden Anlage auf der Dichtung 158 gelangen.

Durch die beschriebene, erfindungsgemäße Ausgestaltung der Ausführungsform gemäß Fig. 10 und 11 ist der Trennkolben 6 in seiner in Fig. 11 dargestellten Absperrstellung, in der das Verschlußelement 150 den Anschluß 16 bzw. den Kanalabschnitt 156 verschließt und hierdurch den Druckraum 154 bildet, noch zumindest geringfügig in beiden axialen Rich tungen beweglich (siehe den Doppelpfeil 172 in Fig. 11). Hierdurch stellt sich aufgrund des pneumatischen Druckes $p_1$ automatisch auch ein entsprechender hydraulischer Druck $p_2$ ein. Die Umfangsdichtung 20 des Trennkolbens 6 braucht hierdurch vorteilhafterweise nur für den Differenzdruck zwischen $p_1$ und $p_2$ ausgelegt zu sein.

Die Erfindung ist nicht auf die dargestellten und beschriebenen Ausführungsbeispiele beschränkt, sondern umfaßt auch alle im Sinne der Erfindung gleichwirkenden Ausführungen. So kann in der Ausführung nach Fig. 10 und 11 beispielsweise das Ringscheibenelement 160 auch in seinem inneren Ringbereich fest, z.B. stoffschlüssig, mit der Trennkolbenstange 26 verbunden und dabei aus einem federelastischen Material, beispielsweise Federstahl, gebildet sein, so daß es praktisch eine Art Tellerfeder bildet.

**Ansprüche**

1. Hydropneumatischer Kolbenspeicher, insbesondere für Kfz-Federungssysteme, mit einem schwimmend geführten Trennkolben, der einen Speicherraum für ein hydraulisches Medium von einer mit einem kompressiblen Medium gefüllten Federkammer trennt,
**dadurch gekennzeichnet,** daß der Trennkolben (6) als Druckwandler mit zwei unterschiedlich großen, wirksamen Druckflächen (22, 24) ausgebildet ist.

2. Kolbenspeicher nach Anspruch 1,
**dadurch gekennzeichnet,** daß die der Federkammer (8) zugekehrte, von einem pneumatischen Druck ($p_1$) beaufschlagte, erste Druckfläche (22) größer als die gegenüberliegende, von einem hydraulischen Druck ($p_2$) beaufschlagte, zweite Druckfläche (24) ist, so daß der pneumatische Druck ($p_1$) kleiner als der hydraulische Druck ($p_2$) ist.

3. Kolbenspeicher nach Anspruch 1 oder 2,
**dadurch gekennzeichnet,** daß der in einem Zylinder (4) geführte Trennkolben (6) mit einer derart axial durch den Speicherraum (10) hindurch und abgedichtet aus dem Zylinder (4) nach außen geführten Trennkolbenstange (26) verbunden ist, daß der Speicherraum (10) einen gegenüber dem Innenquerschnitt der Federkammer (8) reduzierten, ringförmigen Querschnitt aufweist.

4. Kolbenspeicher nach einem oder mehreren der Ansprüche 1 bis 3,
**dadurch gekennzeichnet,** daß in den Speicherraum (10) mindestens ein Anschluß (16) für eine Leitungsverbindung (18) mündet.

5. Kolbenspeicher nach einem oder mehreren der Ansprüche 1 bis 4,
**dadurch gekennzeichnet,** daß die Federkammer (8) mindestens einen mit einem Verschlußelement, insbesondere einem Ventil (14), ausgestatteten Füllanschluß (12) aufweist.

6. Kolbenspeicher nach einem oder mehreren der Ansprüche 1 bis 5,
**dadurch gekennzeichnet,** daß der Trennkolben (6) mit einer hydraulischen und/oder einer pneumatischen Endlagen-Stoßdämpfung ausgestattet ist.

7. Kolbenspeicher nach Anspruch 6,
**dadurch gekennzeichnet,** daß für die hydraulische, in Ausfederungsrichtung wirkende Endlagen-Stoßdämpfung zwischen dem Speicherraum (10) und seinem Anschluß (16) ein Drosselkanal mit einem sich in Abhängigkeit von der Trennkolbenbewegung ändernden Strömungsquerschnitt gebildet ist.

8. Kolbenspeicher nach Anspruch 7,
**dadurch gekennzeichnet,** daß der Trennkolben (6) auf seiner dem Speicherraum (10) zugekehrten Seite einen sich axial erstreckenden, die Trennkolbenstange (26) konzentrisch mit Abstand umschließenden Ringsteg (34) derart aufweist, daß zwischen diesem Ringsteg (34) und der Innenwandung des Zylinders (4) ein geringer Ringspalt (36) gebildet ist, wobei der in den Speicherraum (10) mündende Anschluß (16) im dem Trennkolben (6) axial abgekehrten Endbereich der Umfangswandung des Zylinders (4) angeordnet ist und eine innere Mündungsöffnung (38) aufweist, die eine sich in dem Trennkolben (6) axial abgekehrter Richtung insbesondere birnenförmig verjüngende Flächenform besitzt.

9. Kolbenspeicher nach Anspruch 7 oder 8,
**dadurch gekennzeichnet,** daß der Drosselkanal in der Ausfederungs-Endlage des Trennkolbens (6) noch einen bestimmten Mindest-Strömungsquerschnitt aufweist, wozu insbesondere der Ringsteg (34) des Trennkolbens (6) radiale Durchströmöffnungen (42) aufweist.

10. Kolbenspeicher nach einem oder mehreren der Ansprüche 1 bis 9,
**dadurch gekennzeichnet,** daß die Federkammer (8) derart mit mindestens einem Reserveraum (46, 48) verbunden ist, daß in der Einfederungs- Endlage des Trennkolbens (6) noch ein bestimmtes Mindest-Restvolumen für das kompressible Medium vorhanden ist.

11. Kolbenspeicher nach Anspruch 10,
**dadurch gekennzeichnet,** daß der Reserveraum (46) von einer sich axial in den Trennkolben (6) oder durch den Trennkolben (6) hindurch in die Trennkolbenstange (26) erstreckenden Vertiefung (52) gebildet ist.

12. Kolbenspeicher nach Anspruch 10,
**dadurch gekennzeichnet,** daß die Trennkolbenstange (26) zur Bildung des Reserveraums (46) hohl, insbesondere hohlzylindrisch, ausgebildet und der Reserveraum (46) über mindestens eine Passage (56) des Trennkolbens (6) mit der Federkammer (8) verbunden ist.

13. Kolbenspeicher nach einem oder mehreren der Ansprüche 10 bis 12,
**dadurch gekennzeichnet,** daß der Reserveraum (48) von einer sich auf der dem Trennkolben (6) gegenüberliegenden Seite an die Federkammer (8) anschließenden Zylinderkammer (54) gebildet ist.

14. Kolbenspeicher nach einem oder mehreren der Ansprüche 10 bis 13,
**dadurch gekennzeichnet,** daß das Volumen des trennkolbenseitigen Reserveraums (46) und/oder das Volumen des dem Trennkolben (6) gegenüberliegenden, zylinderseitigen Reserveraums (48) über Stellmittel

EP 0 425 876 A2

(60) von außen veränderbar sind/ist.

15. Kolbenspeicher nach einem oder mehreren der Ansprüche 12 bis 14,
**dadurch gekennzeichnet,** daß die Stellmittel (60) einen innerhalb der hohlzylindrischen Trennkolbenstange (26) axial verstellbar geführten Steuerkolben (62) und/oder einen innerhalb der Zylinderkammer (54) verstellbar geführten Steuerkolben (74) aufweisen.

16. Kolbenspeicher nach Anspruch 14 oder 15,
**dadurch gekennzeichnet,** daß die Stellmittel (60) mechanisch oder über ein Druckmedium, insbesondere hydraulisch, betätigbar sind.

17. Kolbenspeicher nach einem oder mehreren der Ansprüche 14 bis 16,
**dadurch gekennzeichnet,** daß der Trennkolben (6) und/oder der Steuerkolben (74) mit einem die Kolbenstellung erfassenden Weggeber (108, 110) verbunden sind/ist.

18. Kolbenspeicher nach einem oder mehreren der Ansprüche 1 bis 17,
**gekennzeichnet durch** ein integriertes, zwischen dem Speicherraum (10) und dessen Anschluß (16) angeordnetes, insbesondere verstellbares Dämpfungsventil (28).

19. Kolbenspeicher nach Anspruch 18,
**dadurch gekennzeichnet,** daß das Dämpfungsventil (28) mindestens ein Drosselventil, vorzugsweise zwei bezüglich der Strömungsrichtung des hydraulischen Mediums gegensinnig gerichtete Drosselven tile (124, 120), aufweist, wobei jedes Drosselventil (124, 126) mindestens einen zur Dämpfungseinstellung mit einem Ventilelement ausgestatteten Drosselkanal (130) aufweist, wobei das Ventilelement jedes Dämpfungsventils (124, 126) als den Drosselkanal (130) an seiner Austrittsmündung (132) für das hydraulische Medium zumindest teilweise abdeckendes, einendig eingespanntes Blattfederelement (134) ausgebildet ist, und wobei die Dämpfungseinstellung durch Variation der freien Blattlänge (1) des Blattfederelementes (134) erfolgt.

20. Kolbenspeicher nach Anspruch 19,
**dadurch gekennzeichnet,** daß die Blattlänge (1) des jeweiligen Blattfederelementes (134) zwischen einem maximalen Wert und, bezogen auf den Drosselkanal (130), einer Länge gleich Null insbesondere stufenlos veränderbar ist.

21. Hydropneumatischer Kolbenspeicher, insbesondere für Kfz-Federungssysteme, mit einem schwimmend geführten Trennkolben, der einen Speicherraum für ein hydraulisches Medium von einer mit einem kompressiblen Medium gefüllten Federkammer trennt, insbesondere nach einem oder mehreren der Ansprüche 1 bis 20,
**dadurch gekennzeichnet,** daß der Trennkolben (6) auf der Seite des Speicherraumes (10) ein Verschlußelement (150) aufweist, welches in einer in Richtung eines speicherraumseitigen Endanschlages (152) verschobenen Absperrstellung des Trennkolbens (6) einen in den Speicherraum (10) mündenden Hydraulik-Anschluß (16) derart verschließt, daß ein ein Restvolumen des Speicherraumes (10) aufweisender, abge schlossener, vollständig mit dem hydraulischen Medium gefüllter Druckraum (154) gebildet ist, wobei das Verschlußelement (150) derart federelastisch ausgebildet ist, daß der Trennkolben (6) gegen eine Federkraft über die Absperrstellung hinaus in Richtung des Endanschlages (152) beweglich ist.

22. Kolbenspeicher nach Anspruch 21,
**dadurch gekennzeichnet,** daß der Hydraulik-Anschluß (16) über einen axialen Kanalabschnitt (156) auf der dem Trennkolben (6) gegenüberliegenden Seite vorzugsweise zentrisch in den Speicherraum (10) mündet.

23. Kolbenspeicher nach Anspruch 22,
**dadurch gekennzeichnet,** daß sich die Trennkolbenstange (26) derart durch den axialen Kanalabschnitt (156) erstreckt, daß dieser die Trennkolbenstange (26) mit einem kreisringförmigen Querschnitt umschließt.

24. Kolbenspeicher nach einem oder mehreren der Ansprüche 21 bis 23,
**dadurch gekennzeichnet,** daß das Verschlußelement (150) des Trennkolbens (6) ein an der Trennkolbenstange (26) in axialer Richtung federelastisch beweglich angeordnetes, in der Absperrstellung die Mündung des axialen Kanalabschnittes (156) überdekkendes sowie den Druckraum (154) über eine die Mündung umschließende Dichtung (158) abdichtendes Ringscheibenelement (160) aufweist.

25. Kolbenspeicher nach Anspruch 24,
**dadurch gekennzeichnet,** daß das Ringscheibenelement (160) des Verschlußelementes (150) insbesondere einstückig mit einer verschiebbar auf der Trennkolbenstange (26) angeordneten Ringhülse (162) verbunden ist, wobei ein zwischen der Trennkolbenstange (26) und der Ringhülse (162) gebildeter Ringspalt über einen Dichtring (164) abgedichtet ist.

26. Kolbenspeicher nach einem oder mehreren der Ansprüche 21 bis 25,
**dadurch gekennzeichnet,** daß zwischen dem Trennkolben (6) und dem Verschlußelement (150) eine Druckfeder (166) unter Vorspannung angeordnet ist, wobei die Druckfeder (166) vorzugsweise als die

11

EP 0 425 876 A2

Trennkolbenstange (26) und die Ringhülse (162) umschließende und das Ringscheibenelement (160) beaufschlagende Spiralfeder ausgebildet ist.

27. Kolbenspeicher nach einem oder mehreren der Ansprüche 21 bis 26,
**dadurch gekennzeichnet,** daß die Trennkolbenstange (26) einen insbesondere durch einen in einer Ringnut sitzenden Seegerring (170) gebildeten Anschlag (168) auf der dem Trennkolben (6) abgekehrten Seite des Verschlußelementes (150) aufweist.

FIG.1

FIG.2

FIG.3

FIG.4

FIG.5

FIG.6

FIG.7

FIG.8

17

# FIG.9

# FIG.10

# FIG.11